(19) Europäisches Patentamt
European Patent Office
Office européen des brevets

(11) **EP 0 916 977 A1**

(12) **DEMANDE DE BREVET EUROPEEN**

(43) Date de publication:
**19.05.1999 Bulletin 1999/20**

(51) Int Cl.⁶: $G02B\ 6/34$

(21) Numéro de dépôt: **98402813.4**

(22) Date de dépôt: **13.11.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **13.11.1997 FR 9714230**

(71) Demandeur: **FRANCE TELECOM**
**75015 Paris (FR)**

(72) Inventeurs:
• **Rigny, Arnaud**
  **92220 Bagneux (FR)**
• **Bruno, Adrien**
  **91120 Palaiseau (FR)**

(74) Mandataire: **Texier, Christian**
  **Cabinet Regimbeau,**
  **26, Avenue Kléber**
  **75116 Paris (FR)**

(54) **Demultiplexeur à réponse spectrale carree**

(57)     La présente invention concerne un composant optique multiplexeur et/ou démultiplexeur du type à spectrographe à réseau de guides d'onde, caractérisé en ce que des numéros (1,...,N) étant attribués aux guides selon l'ordre croissant de leurs longueurs ($L_i$) de chemin optique, les longueurs de chemin optique ($L_i$) des guides décrivent une fonction du numéro de guide (1,...,N) qui varie autour d'une fonction linéaire moutonne (D), un écart ($\Delta L_i$) mesuré entre cette fonction ($L_i$) du numéro de guide et cette fonction linéaire moyenne (D) décrivant une fonction d'écart ($\Delta L_i$) non limitée à un ensemble de deux fonctions linéaires, cette fonction d'écart étant apte à conférer au composant optique une réponse spectrale de forme carrée (40).

*FIG.1*

## Description

La présente invention est relative à un composant multiplexeur et/ou démultiplexeur du type à spectrographe à réseau de guides d'onde (également appelé "phasar" selon la terminologie usuellement employée par l'homme du métier).

Les multiplexeurs à spectrographes à réseau de guides d'onde comportent classiquement un réseau dispersif de guides optiques connectés à des guides d'entrée et des guides de sortie par deux coupleurs en étoile. Le champ dans un guide d'entrée est reproduit dans le plan des guides de sortie lorsque la différence de trajet optique entre deux guides adjacents du réseau est égale à un nombre entier de fois la longueur d'onde d'entrée. Autrement dit, la position du maximum d'intensité dépend du plan équiphase à la sortie du réseau de guides et donc dépend de la longueur d'onde. Une telle configuration permet donc de séparer spatialement différentes longueurs d'onde. Une variation de longueur d'onde induit une translation de la distribution du champ sur les guides de sortie.

De tels composants sont, par exemple, utilisés comme démultiplexeur 1 vers N, comme multiplexeur N vers 1 ou encore comme multiplexeur N vers N en commutation.

Ils trouvent en particulier avantageusement application dans le domaine des télécommunications sur fibres optiques, comme par exemple, dans un circuit de réception en détection directe dans un système de transmission. Dans les réseaux de distribution optique, ils peuvent être utilisés pour la séparation vers différents utilisateurs de signaux de longueur d'onde différente arrivant sur une même fibre optique, chaque utilisateur recevant sa propre longueur d'onde. Ils sont également avantageusement utilisés dans des dispositifs d'interconnexion optique entre par exemple, des "puces" électroniques rapides à haut degré d'intégration ou entre ordinateurs ou au sein même d'ordinateurs.

Habituellement, la réponse spectrale obtenue dans un guide de sortie d'un tel composant correspond au couplage d'un faisceau gaussien dans un guide gaussien et est donc elle-même gaussienne.

Toutefois, une réponse spectrale gaussienne nécessite un contrôle précis des longueurs d'onde en émission, ce qui rend difficile son utilisation dans un système. L'existence de petites fluctuations sur les longueurs d'onde d'émission des lasers (fluctuations dues à la température) impose ainsi un asservissement des lasers, ce qui est une solution difficile et coûteuse, ou encore des canaux présentant des réponses spectrales plus larges.

Un élargissement de la réponse spectrale permet aussi une indépendance à la polarisation plus facile à réaliser. En effet, les techniques proposées pour obtenir une indépendance à la polarisation et faisant appel à un contrôle de la géométrie des guides restent peu performantes.

Grâce à une réponse spectrale plate ou carrée, la puissance reçue sur un canal est indépendante de la polarisation, même si les deux pics TE et TM sont légèrement décalés (décalage lié par exemple à un mauvais contrôle de la géométrie).

Plusieurs techniques ont déjà été proposées pour réaliser un spectrographe à réseau de guides d'onde présentant une réponse spectrale de type carré.

On a ainsi proposé de modifier la forme du mode ou des guides en entrée (ou en sortie). En effet, dans un phasar, la lumière dans le guide d'entrée se propage à travers le premier coupleur et s'étend latéralement. Les guides de la nappe interceptent la lumière, qui se propage ensuite dans chaque guide, et interfère dans le deuxième coupleur. Le champ à l'entrée des guides de sortie, créé par ces interférences, reproduit le champ à la sortie du guide d'entrée. Ainsi, la réponse spectrale, transmission entre l'entrée et la sortie en fonction de la longueur d'onde, correspond à la convolution entre le mode d'entrée et le mode de sortie.

Ainsi, si le mode d'entrée peut être considéré comme la superposition de deux pics, la convolution avec un mode de sortie gaussien donne une réponse spectrale aplatie.

Ainsi, on a proposé dans "Recent improvements in arrayed waveguide grating dense wavelength division multi/demultiplexers", Hitachi Cable Limited : H. Uetsuka et al., E.C.I.O. 97, une première solution consistant à utiliser une jonction Y à l'entrée du premier coupleur. La lumière est ainsi équirépartie entre les deux branches de cette jonction. On peut donc considérer que le mode d'entrée est composé de deux pics. Ainsi, la convolution de ces deux pics avec le mode du guide de sortie est une fonction aplatie.

On a également proposé dans "Chirping of a MMI-PHASAR multiplexer for application in multiwavelength lasers", University of Delph : C.G.P. Herben et al., E.C.I.O. 97, une seconde solution consistant à utiliser un coupleur d 'interférence multimode, appelé aussi MMI ou MultiMode Interference Coupler selon la terminologie anglophone, pour obtenir en entrée du premier coupleur un champ "bimode", comportant deux pics. Pour la même raison, la réponse spectrale est aplatie.

Ces deux solutions nécessitent l'introduction d'un objet supplémentaire tel qu'une jonction Y ou un MMI, ce qui va à l'encontre de la réduction des volumes au sein des systèmes. De tels dispositifs demandent en outre des études fastidieuses pour être optimisés. De plus, ces solutions ne permettent pas d'obtenir des réponses spectrale fortement aplaties, ou carrées.

Pour quantifier le fait qu'une réponse spectrale est plus ou moins aplatie, on définit un paramètre $\eta$ comme

le rapport entre la largeur spectrale à 1 dB et la largeur spectrale à 20 dB.

Le coefficient η est d'autant plus élevé que la réponse spectrale est carrée ou aplatie. Ce coefficient est par exemple de 23% pour une gaussienne.

La modification du mode d'entrée selon ces deux techniques, à jonction Y et à MMI, permet d'obtenir un mode composé de plusieurs pics gaussiens. Le mode résultant contient donc des "flancs" gaussiens, et la réponse spectrale résultante aussi. Le coefficient η est donc limité par la nature intrinsèquement gaussienne des modes. Ainsi, avec la solution à jonction Y, on obtient un paramètre η égal à 32% et avec la solution à MMI, le paramètre η est de 44%. Obtenir un coefficient η proche de 90% est exclu avec ces méthodes.

Par ailleurs, on a proposé dans "Passband flattening of PHASAR WDM using input and output star couplers designed with two focal points", Corning : D. Trouchet, A. Béguin, H. Boerk, C. Prel, C. Lerminiaux, R.O. Maschmeyer, OFC 1997 Technical Digest p. 302, une technique consistant à utiliser deux points focaux dans le coupleur de sortie, permettant de séparer l'énergie en deux pics gaussiens. La superposition de ces pics, convoluée avec le mode de sortie permet d'obtenir une réponse spectrale aplatie.

Dans la demande de brevet français FR-96 11601, on a également proposé un phasar comportant deux réseaux de guides de pas différents.

La demande de brevet FR-96 11601 propose également un phasar dont un guide en entrée du coupleur d'entrée ou en sortie du coupleur de sortie présente une gamme telle que ce guide, tout en restant monomode, présente une forme à deux pics.

Par ces trois dernières techniques, les flancs de la réponse spectrale obtenue sont gaussiens. On ne peut donc pas obtenir des réponses spectrales fortement carrées.

Il a également été proposé, notamment dans "Arrayed-waveguide grating multiplexer with a flat spectral response", NTT, K. Okamoto and H. Yamada, Optics Letters, Janvier 1995, Vol. 20, No. 1, de chercher à obtenir dans le réseau une répartition de la puissance de type "sinus cardinal" en modifiant la répartition en puissance à l'entrée du réseau de guides. La réponse spectrale étant la "transformée de Fourier de cette répartition, elle sera alors carrée.

La répartition de la puissance dans la nappe est due à l'expansion du mode du guide d'entrée qui se couple dans les guides du réseau. Cette expansion est généralement modélisée par une transformée de Fourier. Comme les guides généralement utilisés sont des guides monomodes intégrés ayant, en bonne approximation, un mode gaussien latéralement (donc le champ après expansion est aussi gaussien), il est difficile d'obtenir une répartition de puissance dans la nappe de type "sinus cardinal" avec de tels guides.

Pour obtenir des lobes secondaires dans la nappe, il faut donc modifier le mode du guide d'entrée, celui-ci devant être de forme "carrée". Il faut donc modifier la forme de ce mode, sans pour autant utiliser des guides multimodes.

Les lobes secondaires de la fonction sinus cardinal doivent de plus prendre alternativement des valeurs positives et négatives. Comme la puissance est toujours positive, il faut introduire un déphasage de $\pi$ dans la nappe au niveau des guides correspondant à des lobes secondaires de cette répartition en puissance.

Le déphasage correspondant aux lobes secondaires doit être contrôlé avec précision, une erreur de position d'un guide sur le déphasage supplémentaire dégradant très fortement la réponse spectrale et rendant le phasar inutilisable. Il faut de plus contrôler parfaitement la position des lobes secondaires dans la nappe.

Comme on le comprendra, cette technique qui joue sur la forme de la puissance d'entrée et le déphasage dans le réseau de guides est difficile à mettre en oeuvre, un mauvais contrôle des paramètres de fabrication dégradant très rapidement les performances du composant.

Le but principal de l'invention est de proposer un multiplexeur et/ou démultiplexeur à spectrographe à réseau de guides d'onde qui présente une réponse spectrale carrée et qui ne présente pas les inconvénients des techniques précitées.

L'invention propose également un spectrographe à réseau de guide d'onde monomode réalisable en une seule étape d'épitaxie. Un phasar selon l'invention est donc simple à réaliser.

Un phasar selon l'invention permet de s'affranchir des fluctuations des lasers en émissions, est compatible avec l'integration d'autres composants, et présente une géométrie qui n'est pas modifiée par l'introduction d'un élément supplémentaire.

Ainsi, l'invention propose un composant optique multiplexeur et/ou démultiplexeur du type à spectrographe à réseau de guides d'onde comportant un coupleur d'entrée et un coupleur de sortie entre lesquels ledit réseau s'étend, et comportant des guides optiques respectivement en entrée et en sortie desdits coupleurs d'entrée et de sortie, dans lequel des numéros étant attribués aux guides d'onde dans l'ordre croissant de leurs longueurs de chemin optique, les longueurs de chemin optique des guides décrivent une fonction du numéro de guide qui varie autour d'une fonction linéaire moyenne, un écart mesuré entre cette fonction du numéro de guide et cette fonction linéaire moyenne décrivant une fonction d'écart non limitée à un ensemble de deux fonctions linéaires, cette fonction d'écart étant apte à conférer au composant optique une réponse spectrale de forme carrée.

D'autres caractéristiques, buts et avantages de la présente invention apparaîtront à la lecture de la description qui va suivre et en regard des dessins annexés donnés à titre d'exemples non limitatifs et sur lesquels :

- la figure 1 est un graphique représentant une répartition de longueurs de chemins optiques de guides d'un réseau conforme à l'invention ;
- la figure 2 est un graphique représentant une répartition d'écarts de longueurs de chemin optique par rapport à une répartition linéaire, conforme à l'invention ;
- la figure 3 représente une réponse spectrale obtenue grâce à la répartition d'écarts de la figure 2 ;
- la figure 4 représente sur un même graphique un ensemble autorisé pour des réponses spectrales, une réponse spectrale gaussienne et une projection de cette réponse sur l'ensemble autorisé ;
- les figures 5 à 8 sont des tracés de réponses spectrales de composants optiques conformes à l'invention ;
- la figure 9 est un tracé représentant une répartition d'écarts de longueur de chemin optique dans le cas d'un réseau de 150 guides conforme à la présente invention ;
- la figure 10 est un tracé d'une réponse spectrale correspondant à la répartition de la figure 9 ;
- la figure 11 représente un composant optique conforme à la présente invention, dont chacun des guides du réseau est constitué de deux portions de biréfringence différentes ;
- la figure 12 représente une coupe transversale d'un guide du réseau de la figure 11 dans une portion de type normal ; et
- la figure 13 représente une coupe transversale d'un guide du réseau de la figure 12, dans une portion de type de compensation.

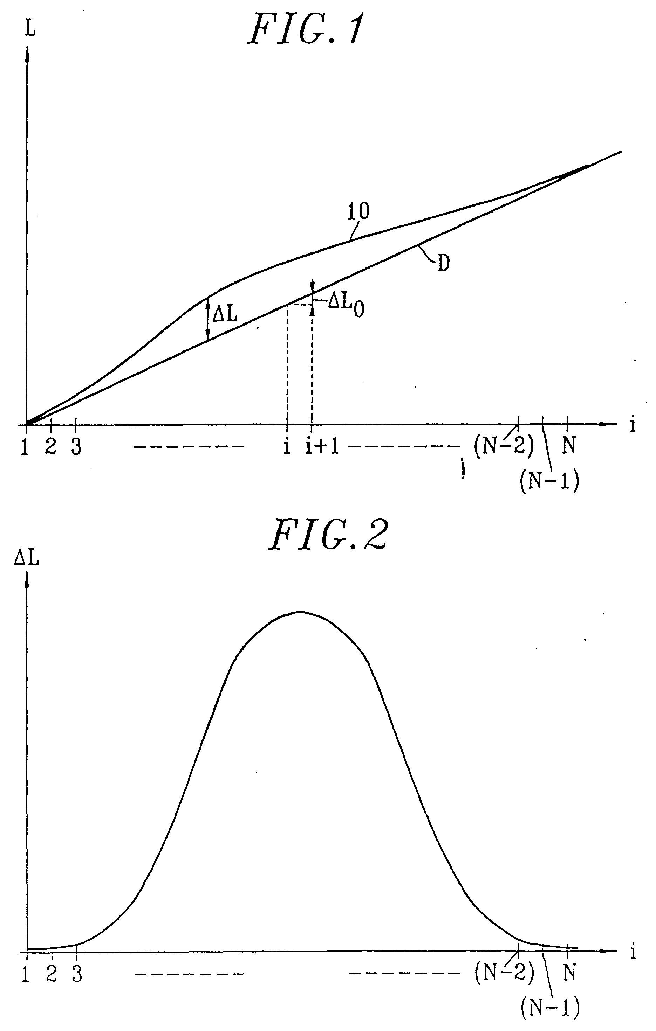

En abscisse du graphique de la figure 1 sont répartis dans, un ordre croissant, des numéros affectés à des guides de spectrographe à réseau de guides d'onde. De manière classique, pour un réseau à N guides, on numérote ces guides de 1 à N selon leur rang i dans l'ordre croissant des longueurs de chemin optique des guides.

Les ordonnées du graphique de la figure 1 correspondent à des longueurs L de chemin optique des guides du réseau.

Ce graphique présente une droite D ayant une pente positive, correspondant à un spectrographe à réseau de guides d'onde, ou phasar, de type connu.

Cette droite D correspond à une répartition des longueurs de guides selon un incrément de longueur fixé $\Delta L_o$ entre deux guides adjacents du réseau.

Cette différence de longueur $\Delta L_o$ constante est, comme représenté sur la figure 1, égale à la pente de la droite D.

Un tel phasar produit, au sein d'un coupleur de sortie, un champ qui est la reproduction exacte du mode d'entrée. Ainsi, lorsque le ou les guides d'entrée ont un mode de type gaussien, le champ obtenu par interférence dans le coupleur de sortie est également de type gaussien.

Les inventeurs ont découvert qu'en modifiant légèrement une telle répartition à incrément fixe des longueurs de guides, tout en conservant la même répartition en puissance dans la nappe, on peut obtenir un phasar présentant une réponse spectrale carrée avec des flancs plus raides que des flancs gaussiens.

Sur le graphique de la figure 1, on a représenté ainsi un tracé 10 correspondant à une répartition des longueurs de chemin optique des guides d'un phasar conforme à l'invention.

Comme on peut le voir sur la figure 1, le tracé 10 est, au voisinage des premiers numéros de guides ainsi qu'au voisinage des derniers numéros de guides, pratiquement confondu avec la droite D.

L'ensemble du tracé 10 se trouve au dessus de la droite D, c'est-à-dire que, pour tout numéro de guide i compris entre 1 et N, la longueur du guide i du réseau selon l'invention, correspondant au tracé 10, est plus grande que la longueur du guide i du réseau classique correspondant à la droite D.

Plus précisément, le tracé 10 présente par rapport à la droite D un écart $\Delta L$ positif qui atteint un maximum au voisinage des numéros de guide proches de N/2.

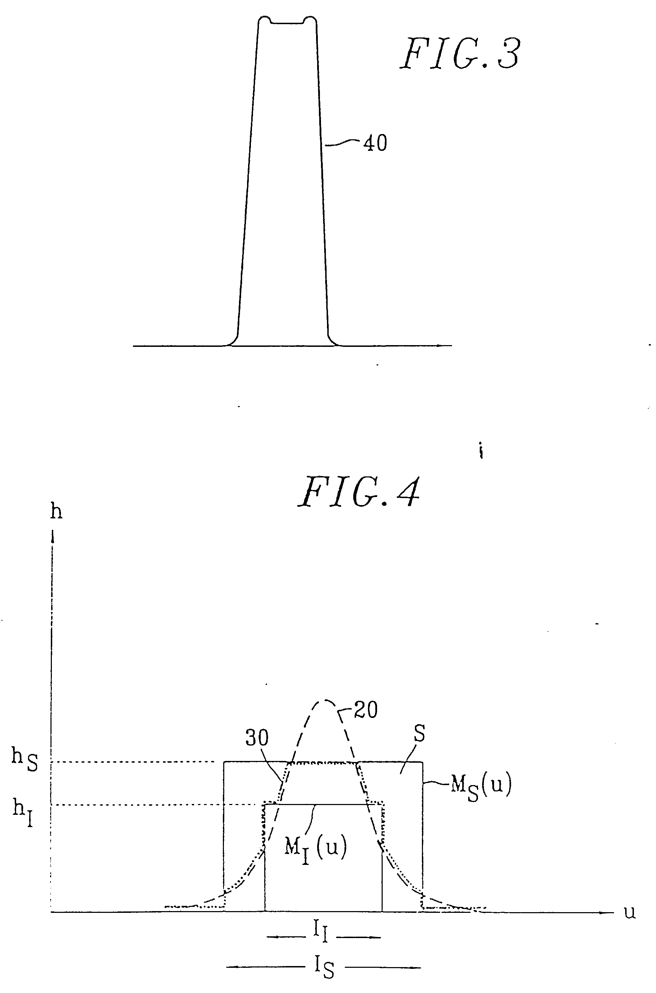

On a représenté sur la figure 2 un tracé de la fonction du numéro de guide dans le réseau qui est décrite par cet écart $\Delta L$.

Ce tracé part d'une valeur d'écart nulle selon une tangente horizontale au voisinage des premiers numéros de guide, atteint ensuite un maximum à tangente horizontale au voisinage des numéros proches de N/2, et rejoint une valeur nulle selon une tangente horizontale, au voisinage du nombre total N de guides.

Plus précisément, la forme du tracé des écarts $\Delta L$ entre les numéros 1 et N est celle d'une portion de sinusoïdale prise entre deux minima consécutifs de cette sinusoïdale.

Comme on peut le voir sur la figure 1, les valeurs de l'écart AL sont suffisamment faibles en comparaison aux valeurs atteintes par la droite D pour pouvoir considérer que la droite D est une droite moyenne autour de laquelle varient les valeurs prises par la courbe 10.

Les inventeurs ont découvert qu'un phasar présentant une répartition des longueurs de ses guides de la forme de la courbe 10 présente une réponse spectrale de forme nettement plus carrée ou à sommet nettement plus aplati qu'un phasar ayant une répartition des longueurs de guides selon une droite proche de la courbe 10, telle que la droite D.

Ainsi on peut, à partir d'un mode d'entrée gaussien, d'un réseau de guides monomodes et d'une répartition de puissance dans la nappe imposée de manière classique par la géométrie du coupleur d'entrée, obtenir dans le coupleur de sortie, un champ créé par interférences qui est de forme carrée, tel que celui qui est représenté par une courbe 40 sur la figure 3.

Ainsi, une répartition des écarts $\Delta L_i$ ayant par exemple une forme globale proche du tracé de la figure 2 permettent d'obtenir un phasar à réponse spectrale carrée tel que décrit précédemment.

On expose maintenant comment, à partir du choix d'un nombre N de guides et à partir d'une répartition des longueurs des guides de référence présentant un écart fixé $\Delta L_o$ entre deux guides consécutifs, on peut déterminer une répartition des longueurs variant autour de cette répartition linéaire et permettant d'obtenir une réponse spectrale carrée.

On conçoit un phasar selon l'invention à partir d'un phasar classique présentant un incrément de longueur fixe $\Delta L_o$ entre deux guides consécutifs du réseau, dont on connaît notamment la répartition des puissances dans les guides du réseau, c'est à dire dont on connaît la puissance $P_i$ transmise par tout guide de numéro i, i étant compris entre 1 et N, où N est le nombre total de guides du réseau. Cette répartition est gaussienne de manière générale, mais peut être de toute autre forme.

On cherche à déterminer une longueur supplémentaire $\Delta L_i$ à donner au guide i par rapport au guide i du phasar de départ à incrément fixe.

Cette longueur supplémentaire $\Delta L_i$ est une longueur algébrique, c'est-à-dire que la longueur supplémentaire $\Delta L_i$ peut être négative. La longueur supplémentaire $\Delta L_i$ introduit un déphasage $\varepsilon_i$ en sortie du guide i par rapport à un même signal sortant du guide i du phasar de référence à incrément fixe. Ce déphasage $\varepsilon_i$ est égal à la longueur de chemin optique supplémentaire $\Delta L_i$.

Ainsi, la réponse spectrale h(u) du phasar selon l'invention est donnée par

$$h(u) = \sum_{n=1}^{N} P_n . e^{j\varepsilon_n} e^{j(n-1)u}$$

où u est la longueur d'onde.

On propose maintenant une méthode pour déterminer les écarts $\Delta L_i$ de façon à obtenir une fonction h(u) de forme carrée.

Pour cela, comme représenté à la figure 4, on choisit deux fonctions carrées $M_s(u)$ et $M_l(u)$, délimitant dans un plan (u, h) une zone S dans laquelle on souhaite que se trouve le tracé de la fonction h(u).

La fonction $M_S(u)$ prend, sur un intervalle $I_s$, une valeur constante $h_s$, et s'annule pour les valeurs de u situées hors de $I_S$. La fonction $M_l(u)$ prend, sur un intervalle $I_l$, une valeur constante $h_l$.

L'intervalle $I_l$ est inclus dans l'intervalle $I_S$, et la valeur $h_l$ est inférieure à la valeur $h_S$, de sorte que les tracés de $M_l$ et $M_S$ délimitent dans le plan (u, h) une bande en forme du U renversé.

On a représenté sur la figure 4 en trait discontinu référencé 20, la réponse spectrale $h_O(u)$ du phasar à incrément fixe $\Delta L_0$ à partir duquel on conçoit le phasar selon l'invention. Cette réponse spectrale est, de manière connue, une gaussienne.

A partir de $h_O(u)$, une première étape consiste à déterminer une fonction $F_2(u)$ définie de la façon suivante. Pour une valeur u donnée, si $h_O(u)$ est compris entre $M_l(u)$ et $M_S(u)$, alors $F_2(u)$ est égal à $h_O(u)$ ; si $h_O(u)$ est supérieur à $M_S(u)$, alors $h_O(u)$ est égal à $M_S(u)$ ; si $h_O(u)$ est inférieur à $M_l(u)$, alors $h_O(u)$ est égal à $M_l(u)$.

On a tracé en pointillé, sur la figure 4, la fonction $F_2(u)$ ainsi obtenue, référencée 30. La détermination de $F_2(u)$ à partir de $h_O(u)$ correspond, en termes mathématiques, à une projection de $h_O(u)$ sur l'ensemble délimité par $M_l(u)$ et $M_S(u)$. Selon l'invention, tout autre type de projection sur un tel ensemble peut être adopté.

Une deuxième étape consiste à calculer des coefficients $a_n$, où n varie entre $-\infty$ et $+\infty$, permettant d'écrire la fonction $F_2(u)$ sous la forme d'une série de Fourier :

$$F_2(u) = \sum_{n=-\infty}^{n=+\infty} a_n e^{j(n-1)u}$$

Connaissant les puissances $P_1, P_2, ..., P_N$, transmises par les guides du réseau, une troisième étape consiste à définir une fonction $F_1(u)$ à partir des coefficients $a_n$, par :

$$F_1(u) = \sum_{n=1}^{N} P_n \frac{a_n}{|a_n|} e^{j(n-1)u} \quad .$$

On réalise à nouveau l'opération appelée première étape ci-dessus, mais maintenant à partir de $F_1(u)$ et non de $h_O(u)$. On détermine donc une nouvelle fonction $F_2(u)$, non plus à partir de $h_O(u)$, mais à partir de la fonction $F_1(u)$ calculée à l'étape précédente.

Ainsi, on détermine $F_2$ à partir de $F_1$ de la façon suivante :

Pour une longueur d'onde u donnée,

- si $F_1(u)$ est inférieure à $M_I(u)$, alors $F_2(u) = M_I(u)$ ;
- si $F_1(u)$ est comprise entre $M_I(u)$ et $M_S(u)$, alors $F_2(u) = F_1(u)$ ;
- si $F_1(u)$ est supérieure à $M_S(u)$, alors $F_2(u) = M_S(u)$.

Puis on effectue à nouveau la deuxième et la troisième étapes définies ci-dessus, de manière à obtenir une nouvelle fonction $F_1(u)$.

On réitère la succession des première, deuxième et troisième étapes définies ci-dessus plusieurs fois jusqu'à ce que le tracé de la fonction $F_1(u)$ obtenue à la troisième étape soit presque entièrement compris entre le tracé de la fonction $M_I(u)$ et celui de la fonction $M_S(u)$, c'est-à-dire jusqu'à ce que $F_1(u)$ soit de forme carrée.

Cette fonction finale $F_1(u)$, s'exprime sous la forme :

$$F_1(u) = \sum_{n=1}^{N} P_n \frac{a_n}{|a_n|} e^{j(n-1)u}$$

ou encore :

$$F_1(u) = \sum_{n=1}^{N} P_n e^{j\varepsilon_n} e^{j(n-1)u} \quad .$$

où $\varepsilon_n$ est la phase de $a_n$.

On appelle $P_n e^{j(n-1)u}$ la puissance complexe dans la nappe.

$F_1(u)$ est la réponse spectrale d'un phasar dans lequel la longueur de tout guide i est égale à la longueur du guide i du phasar à incrément fixe initial, augmentée d'un chemin optique supplémentaire $\Delta L_i = \varepsilon_i$. Comme mentionné précédemment, $\Delta L_i$ peut être négatif. $\Delta L_i$ est donc un écart de chemin optique par rapport à une répartition linéaire moyenne qui est celle d'un phasar connu à incrément fixe.

Il suffit donc de réaliser un tel phasar pour retrouver en pratique cette réponse spectrale carrée $F_1(u)$.

On a déterminé une répartition des longueurs en partant de la réponse spectrale d'un phasar initial à incrément fixe. Dans une variante, on peut débuter l'enchaînement des différentes étapes décrites ci-dessus à partir d'une fonction quelconque qui soit assez proche de l'ensemble S délimité par $M_I(u)$ et $M_S(u)$.

De même, on a défini un ensemble S de projection à l'aide de deux fonctions rectangulaires $M_I(u)$ et $M_S(u)$. Dans une variante, on peut choisir deux fonctions ayant une forme qui ne soit pas strictement rectangulaire.

Les inventeurs ont pu constater qu'en déterminant les longueurs supplémentaires $\Delta L_i$ de cette façon, on trouve, de manière générale, des solutions $\Delta L_i$, i variant de 1 à N, qui se trouvent sur des tracés de la forme de celui de la figure 2.

Plus précisément, les séries $\varepsilon_1,...,\varepsilon_N$ obtenues sont généralement de la forme :

$$\varepsilon_i = A\cos\left[(\pi + \phi)\frac{-(N+1)+2i}{(N-1)}\right]$$

où A et φ sont des constantes.

Plus généralement, les séries $\varepsilon_1,...,\varepsilon_N$ se trouvent sur une courbe définie par une fonction du type f(x) = A. cos[(π+φ)x], où x varie entre -1 et 1 lorsque le numéro de guide dans la nappe varie de 1 à N.

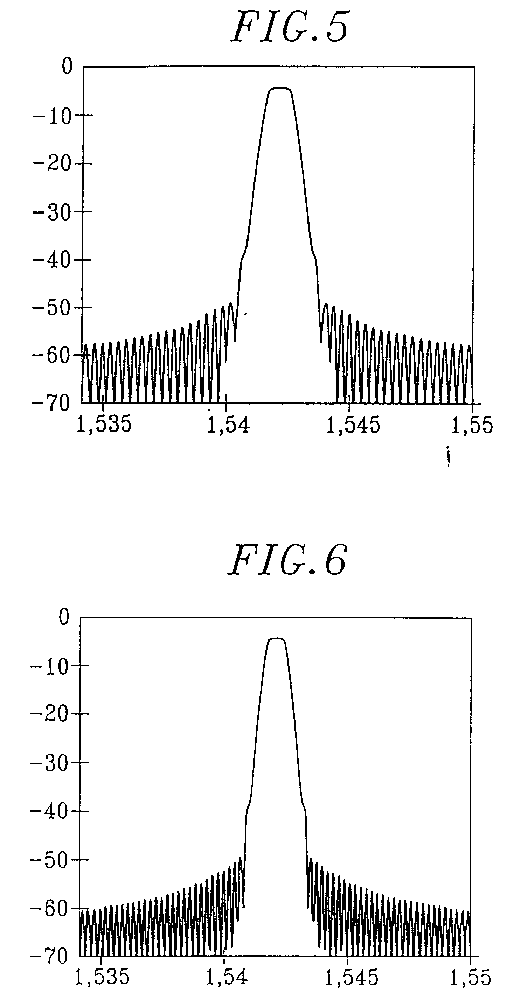

Ainsi, pour un phasar comportant 51 guides, les inventeurs ont obtenu la réponse spectrale sensiblement carrée de la figure 5, avec A valant 1,7 μm, et φ valant 0,1 rad. Cette réponse spectrale a un facteur de mérite η, défini comme le rapport de la largeur spectrale à 1 dB sur la longueur spectrale à 20 dB, qui est égal à 33,3%.

De même, la figure 6 représente la réponse spectrale carrée d'un phasar à 70 guides, ayant un facteur de mérite de 37,5%, obtenue avec 2 μm pour valeur de A et -0,05 radian pour valeur de φ.

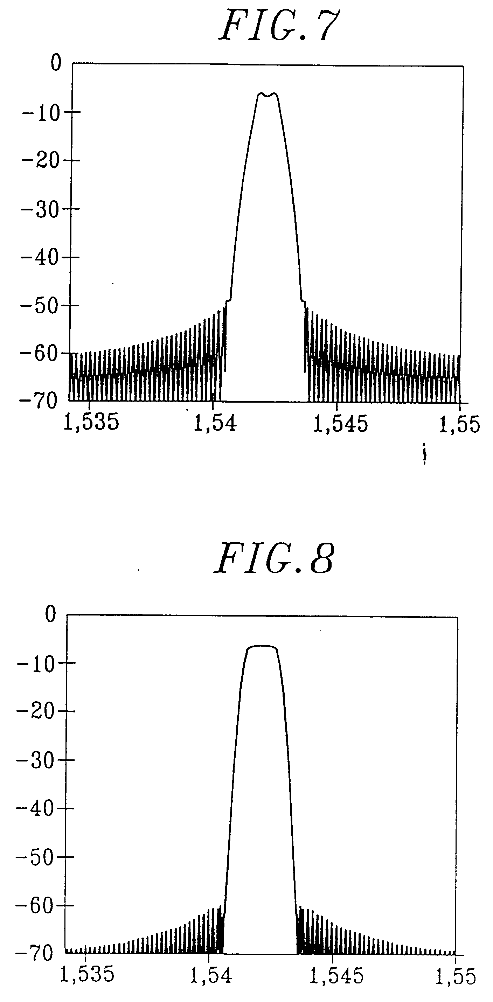

La figure 7 représente une réponse spectrale carrée ayant un facteur de mérite égal à 46,5%, pour un phasar à 82 guides, obtenue avec 3,2 μm pour valeur de A et 0,2 radian pour valeur de φ.

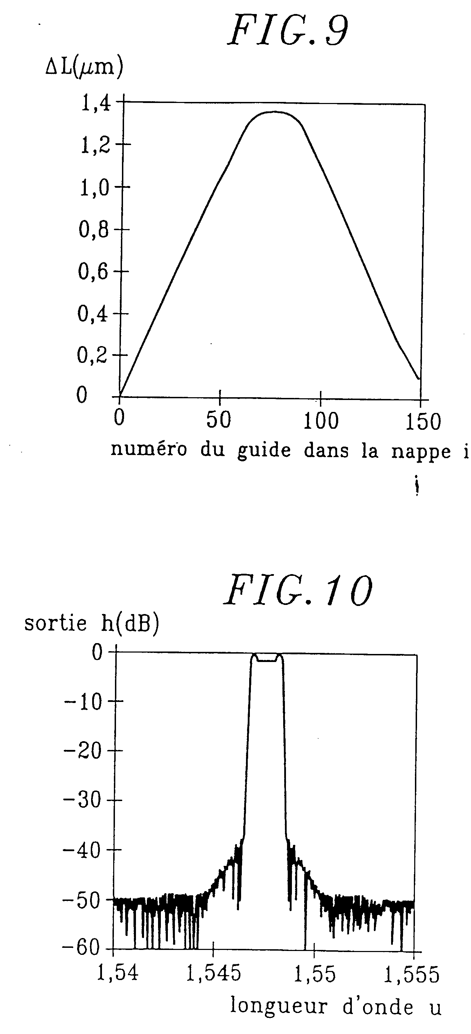

La figure 8 représente une réponse spectrale carrée de facteur de mérite égal à 54 %, d'un phasar à 102 guides, obtenue avec 5 μm pour valeur de A et -0,4 radian pour valeur de φ.

Pour chacun des phasars correspondant aux figures 5 à 8, la répartition de la puissance dans la nappe est une gaussienne pouvant s'écrire $K.exp(-x/0,55)^2$) ou x varie entre -1 et 1 lorsque le numéro de guide varie de 1 à N. L'amplitude K est imposée par le nombre de guides N dans la nappe.

Plus généralement, pour déterminer directement un jeu $\Delta L_1, \Delta L_2...,\Delta L_N$ ou $\varepsilon_1,\varepsilon_2...,\varepsilon_N$ de chemins optiques supplémentaires, on peut adopter une fonction de répartition f de ces différences de chemin optique définie par f(x) =A.cos((π+φ).x), où x varie entre -1 et 1 lorsque le numéro de guide varie respectivement de 1 à N, et on optimise le choix de A et φ afin d'obtenir une réponse spectrale h(u) donnée par :

$$h(u) = \sum_{n=1}^{N} P_n e^{j\varepsilon_n} e^{j(n-1)u}$$

qui ait la forme carrée souhaitée.

Les inventeurs ont découvert que plus la valeur de A est élevée et plus la réponse spectrale est large. De même, plus la valeur de φ est élevée dans les valeurs positives et plus les oscillations dans la bande passante de la réponse spectrale sont importantes. Enfin, plus le nombre de guides est grand, plus la réponse spectrale est étroite.

De manière générale, mais non limitative, on obtient des réponses spectrales de forme suffisamment carrée avec un choix des valeurs de A dans les gammes suivantes :

- si N est compris entre 10 et 55, on choisit A compris entre 1 et 1,8 μm ;
- si N est compris entre 50 et 75, on choisit A compris entre 1,6 et 2,1 μm ;
- si N est compris entre 65 et 85, on choisit A compris entre 1,9 et 3,3 μm ;
- si N est compris entre 80 et 105, on choisit A compris entre 3,1 et 5,1 μm ;

Le choix de A entre 1 et 6 μm est donc généralement avantageux, et de même φ est avantageusement choisi entre 0,5 et -0,5 radian. Bien entendu, l'invention prévoit d'autres choix de A et φ.

Une fois A et φ choisis, on peut approximer la fonction cosinus de la fonction f, pour (π + φ)x compris entre -π/2 et π/2, par une gaussienne ou un polynôme d'ordre 2 ou plus. La réponse spectrale reste alors carrée.

Plus généralement, l'invention ne se limite pas aux écarts $\Delta L_i$ répartis sur le tracé d'une fonction f de la forme f(x)=A.cos((π + φ).x).

Le calcul des longueurs supplémentaires $\Delta L_1$, $\Delta L_2$,..., $\Delta L_N$ selon le procédé itératif décrit plus haut peut également donner pour résultat une fonction de répartition des longueurs supplémentaires qui ne soit pas de la forme sinusoïdale.

Ainsi, on a représenté sur la figure 9 une répartition des écarts $\Delta L_i$ obtenue pour un phasar à 150 guides dans le réseau et comportant huit canaux.

Avec le phasar à 150 guides présentant cette répartition, on a obtenu la réponse spectrale de la figure 10, qui présente un facteur de mérite η supérieur à 90 %.

Comme le montre la figure 9, les modifications des longueurs de guides sont de l'ordre de 1,5 μm. Cet ordre de grandeur permet en pratique de contrôler avec précision la longueur des guides. La répartition des longueurs supplémentaires ne présente pas, dans le cas de la figure 9, de tangente horizontale au voisinage des premiers numéros de guides, ni au voisinage des numéros de guide voisins de N, N étant ici égal à 150.

Cette fonction de répartition des longueurs supplémentaires $\Delta L_i$ présente la forme suivante. Elle croît selon une pente sensiblement constante jusqu'à un numéro de guide proche de 4.N/10, c'est à dire environ le numéro de guide 65, puis décrit, de manière symétrique par rapport à un axe vertical passant par N/2, c'est-à-dire 75, une ligne arrondie dont la pente décroît jusqu'à une valeur opposée à la valeur de la pente sensiblement constante suivie entre les numéros 1 et 65.

Enfin, la fonction de répartition de la figure 9 décroît entre les numéros 85 et 150, avec une pente sensiblement constante opposée à la pente poursuivie entre 1 et 65.

On a proposé ci-dessus deux procédés pour calculer les écarts $\Delta L_i$. Bien entendu, tout autre procédé de calcul peut être adopté sans sortir du cadre de l'invention.

De même, l'invention n'est pas limitée à une répartition en puissance dans la nappe de type gaussienne. Tout autre type de répartition en puissance peut être adopté.

De manière connue, une réponse spectrale plate autorise certains décalages légers entre les pics TE et TM, par exemple un éventuel décalage lié à un mauvais contrôle de la géométrie.

Toutefois, pour obtenir une meilleure indépendance à la polarisation, le réseau de guides est avantageusement réalisé indépendant en lui-même à la polarisation.

Pour cela, toutes les techniques connues sont utilisables, telles que l'utilisation de guides non biréfringents, l'utilisation d'une lame demi-onde, l'utilisation d'un convertisseur de polarisation intégré, une compensation de la biréfringence dans la nappe, ou encore d'autres techniques.

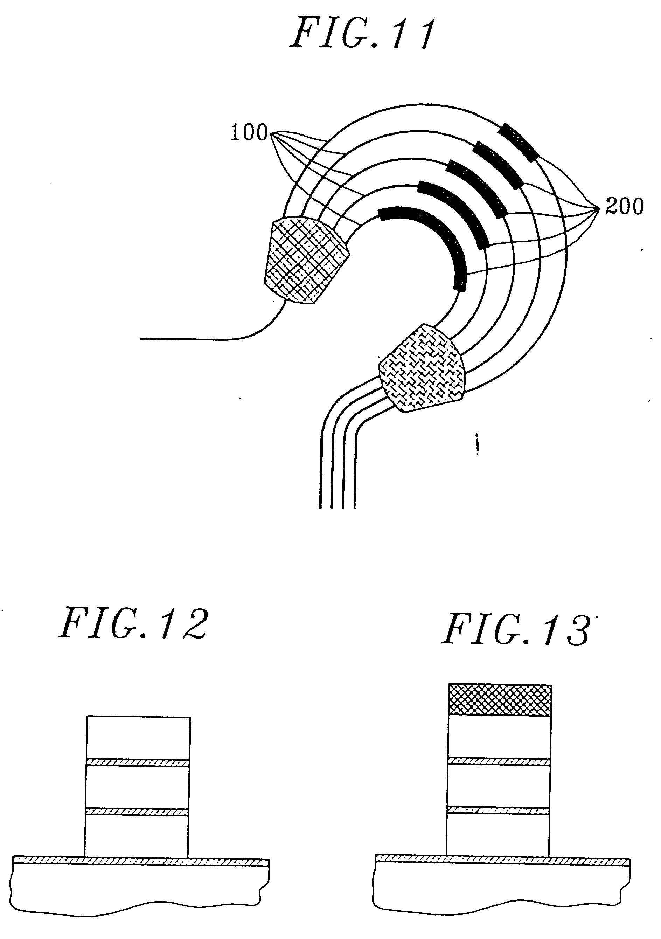

On peut notamment prévoir, comme représenté à la figure 11, un réseau dont chacun des guides comporte deux portions 100, 200, de biréfringences non nulles et différentes.

De telles dispositions sont décrites notamment dans la demande de brevet français FR-95 04031 déposée le 5 avril 1995, et dans l'article "Toper-assisted polarisation compensation in efficiency fibre-coupled InP demultiplexer", Electronics Letters, 26 septembre 1996, Volume 32, Numéro 20, pages 1885-1886, d'A. Rigny, C. Ramus, A. Bruno, Y. Raffle, H. Sik, G. Post, M. Carre et A. Carenco.

Ainsi, on utilise dans le réseau des guides ayant des portions de deux types différents. Un premier type de portion, référencé 100 sur la figure 11, appelé type normal ou type I, est représenté en coupe transversale à la figure 12.

Un deuxième type de portion de guide, appelé type de compensation ou type II, référencé 200 sur la figure 11, est représenté en coupe transversale à la figure 13.

Le tableau A présente, dans un ordre de haut en bas correspondant à la disposition des couches de haut en bas dans le guide, l'épaisseur et la longueur d'onde de bande interdite des couches constituant une portion de guide de type I.

TABLEAU A

| Matériau | Epaisseur (µm) | Longueur d'onde de bande interdite (µm) |
|---|---|---|
| InP | 0,55 | - |
| Quaternaire | 0,05 | 1,3 |
| InP | 0,55 | - |
| Quaternaire | 0,05 | 1,3 |
| InP | 0,55 | - |
| Quaternaire | 0,05 | 1,3 |
| InP (substrat) | Substrat | Substrat |

Le tableau B ci-dessous présente, dans un ordre de haut en bas correspondant à la disposition des couches constituant le guide de haut en bas, l'épaisseur et la longueur d'onde de bande interdite des couches constituant une portion de guide de type II.

TABLEAU B

| Matériau | Epaisseur (µm) | Longueur d'onde de bande interdite (µm) |
|---|---|---|
| Quaternaire | 0,38 | 1,2 |
| InP | 0,55 | - |
| Quaternaire | 0,05 | 1,3 |
| InP | 0,55 | - |
| Q | 0,05 | 1,3 |
| InP | 0,55 | - |

TABLEAU B (suite)

| Matériau | Epaisseur (µm) | Longueur d'onde de bande interdite (µm) |
|---|---|---|
| Quaternaire | 0,05 | 1,3 |
| InP (Substrat) | - | - |

Ces structures sont réalisées par épitaxie sur substrat plan en une seule étape. Les guides de type I et II sont réalisés par gravure ionique réactive (RIE) sèche, et selon un ruban de largeur égale à 5 µm.

Les guides de type I et de type II obtenus sont monomodes et proches de la coupure modale. Ils présentent ainsi un indice effectif variant peu par rapport aux épaisseurs et à la composition des couches. Ainsi, une tolérance de 100 Angströms sur les épaisseurs et de 30 nm sur les compositions est très largement acceptable.

Les deux types de guides présentés ci-dessus permettent donc de réaliser la compensation pour l'indépendance à la polarisation.

On se référera à l'article cité précédemment pour déterminer les longueurs des portions de type I et II à adopter. La mise en oeuvre de cette compensation est effectuée sans tenir compte des longueurs supplémentaires $\Delta L_i$ des guides, c'est-à-dire que l'on calcule les dimensions des portions de type I et II à partir de la valeur de l'incrément fixe $\Delta L_O$ du réseau initial, c'est à dire de la répartition linéaire moyenne des longueurs de chemin optique des guides.

On rappelle seulement que, $\Delta_{typeI}$ étant la différence de longueur entre deux guides adjacents si tout le réseau était de type I, on recherche une différence de longueur $\Delta_{typeII}$ entre deux portions de type II appartenant à deux guides adjacents, de manière à obtenir une biréfringence globale nulle des guides du réseau.

**Revendications**

1. Composant optique multiplexeur et/ou démultiplexeur du type à spectrographe à réseau de guides d'onde comportant un coupleur d'entrée et un coupleur de sortie entre lesquels ledit réseau s'étend, et comportant des guides optiques respectivement en entrée et en sortie desdits coupleurs d'entrée et de sortie, caractérisé en ce que, des numéros (1,...,N) étant attribués aux guides d'onde selon l'ordre croissant de leurs longueurs ($L_i$) de chemin optique, les longueurs de chemin optique ($L_i$) des guides décrivent une fonction du numéro de guide (1,...,N) qui varie autour d'une fonction linéaire moyenne (D), un écart ($\Delta L_i$) mesuré entre cette fonction ($L_i$) du numéro de guide et cette fonction linéaire moyenne (D) décrivant une fonction d'écart ($\Delta L_i$) non limitée à un ensemble de deux fonctions linéaires, cette fonction d'écart étant apte à conférer au composant optique une réponse spectrale de forme carrée (40).

2. Composant optique selon la revendication précédente, caractérisé en ce que, le réseau comportant un nombre N de guides optiques, la fonction d'écart ($\Delta L_i$) est une fonction $\varepsilon(i)$, où i est le numéro de guide variant entre 1 et N, de la forme :

$$\varepsilon(i) = A\cos\left[(\pi + \phi)\frac{-(N+1)+2i}{(N-1)}\right]$$

où A et $\phi$ sont deux constantes.

3. Composant optique selon la revendication précédente, caractérisé en ce que $\phi$ est compris entre -0,5 radian et 0,5 radian.

4. Composant optique selon l'une des revendications 2 ou 3, caractérisé en ce que A est compris entre 1 et 6 µm.

5. Composant optique selon l'une quelconque des revendications précédentes, caractérisé en ce que la fonction d'écart ($\Delta L_i$) s'annule pour les premiers et les derniers numéros de guides du réseau.

6. Composant optique selon l'une quelconque des revendications précédentes, caractérisé en ce que la fonction d'écart ($\Delta L_i$) atteint un maximum pour un numéro de guide proche de la moitié du nombre total de guides du réseau.

**7.** Composant optique selon l'une quelconque des revendications précédentes, caractérisé en ce que la fonction d'écart ($\Delta L_i$) présente une tangente horizontale au voisinage des premiers numéros et des derniers numéros de guide.

**8.** Composant optique selon l'une des revendications précédentes, caractérisé en ce que la fonction d'écart ($\Delta L_i$) est déterminée de la façon suivante :

a) on choisit une répartition initiale des longueurs des guides du type à incrément fixe ($\Delta L_O$), donnant une réponse spectrale $F_1$ connue ;

b) on choisit une fonction rectangulaire inférieure $M_1$ et une fonction rectangulaire supérieure $M_S$ entre lesquelles on souhaite que se trouve la réponse spectrale de forme carrée du composant optique ;

c) on déduit de $F_1$ une fonction $F_2$ comprise entre $M_l$ et $M_S$ et ayant des valeurs proches de celles de $F_1$ ;

d) la fonction $F_2$ s'écrivant, après transformée de Fourier :

$$F_2(u) = \sum_{n=-\infty}^{+\infty} a_n e^{j(n-1)u}$$

et $P_1$, $P_2$,...$P_N$ étant respectivement les puissances transmises par les guides de numéros 1,2,...,N, on définit une nouvelle fonction $F_1$ par :

$$F_1(u) = \sum_{n=1}^{N} \frac{a_n}{|a_n|} P_n . e^{j(n-1)u}$$

e) on répète la succession des étapes c) et d) jusqu'à ce que la fonction $F_1$ obtenue à l'étape d) soit sensiblement comprise entre les fonctions rectangulaires inférieure $M_l$ et supérieure $M_S$, puis

f) on réalise un phasar dont tout guide de numéro i variant de 1 à N présente une longueur de chemin optique égale à la somme de la longueur du guide de numéro i dans la répartition initiale et d'un écart($\Delta L_i$) égal à la phase de $a_i$.

**9.** Composant optique selon la revendication précédente, caractérisé en ce que l'on détermine $F_2$ à partir de $F_1$ de la façon suivante :

pour une longueur d'onde u donnée,

- si $F_1(u)$ est inférieure à $M_l(u)$, alors $F_2(u) = M_l(u)$ ;
- si $F_1(u)$ est comprise entre $M_l(u)$ et $M_S(u)$, alors $F_2(u) = F_1(u)$ ;
- si $F_1(u)$ est supérieure à $M_S(u)$, alors $F_2(u) = M_S(u)$.

**10.** Composant optique selon l'une quelconque des revendications précédentes, caractérisé en ce que les guides du réseau sont constitués chacun de deux portions de guides ayant des biréfringences différentes.

*FIG.1*

*FIG.2*

FIG.3

FIG.4

## FIG.5

## FIG.6

# FIG.7

# FIG.8

## FIG.9

ΔL(μm)

numéro du guide dans la nappe i

i

## FIG.10

sortie h(dB)

longueur d'onde u

## FIG.11

## FIG.12

## FIG.13

**Office européen des brevets**

# RAPPORT DE RECHERCHE EUROPEENNE

Numéro de la demande

EP 98 40 2813

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | OKAMOTO K ET AL: "ARRAYED-WAVEGUIDE GRATING MULTIPLEXER WITH FLAT SPECTRAL RESPONSE" 1 janvier 1995 , OPTICS LETTERS, VOL. 20, NR. 1, PAGE(S) 43 - 45 XP000481041 * le document en entier * --- | 1 | G02B6/34 |
| A | K.OKAMOTO ET AL.: "FLAT SPECTRAL RESPONSE ARRAYED-WAVEGUIDE GRATING MULTIPLEXER WITH PARABOLIC WAVEGUIDE HORNS" ELECTRONICS LETTERS., vol. 32, no. 10, 29 août 1996, pages 1661-1662, XP000637817 ENAGE GB * le document en entier * --- | 1 | |
| A | M.R.AMERSFOORT ET AL.: "PASSEBAND BROADENING OF INTEGRATED ARRAYED WAVEGUIDES FILTERS USING MULTIMODE INTERFERENCE COUPLER" ELECTRONICS LETTERS., vol. 32, no. 5, 29 février 1996, pages 449-451, XP000581524 ENAGE GB * le document en entier * --- | 1 | |
| D,A | EP 0 736 785 A (A.BRUNO ET AL.) 9 octobre 1996 ----- | | |

**DOMAINES TECHNIQUES RECHERCHES (Int.Cl.6)**

G02B

Le présent rapport a été établi pour toutes les revendications

| Lieu de la recherche | Date d'achèvement de la recherche | Examinateur |
|---|---|---|
| LA HAYE | 4 janvier 1999 | Malic, K |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 98 40 2813

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-01-1999

| Document brevet cité au rapport de recherche | Date de publication | Membre(s) de la famille de brevet(s) | Date de publication |
|---|---|---|---|
| EP 0736785 A | 09-10-1996 | FR 2732777 A<br>US 5724461 A | 11-10-1996<br>03-03-1998 |

EPO FORM P0460

Pour tout renseignement concernant cette annexe : voir Journal Officiel de l'Office européen des brevets, No.12/82